# EUROPÄISCHE PATENTSCHRIFT

(11) **EP 2 876 824 B1**
(45) Veröffentlichungstag und Bekanntmachung des Hinweises auf die Patenterteilung: **15.08.2018**
(21) Anmeldenummer: 14193385.3
(22) Anmeldetag: 17.11.2014
(51) Int. Cl.: H04B 10/90

(54) **ÜBERTRAGUNGSANORDNUNG ZUM ÜBERTRAGEN VON DATEN MIT EINER TRÄGERWELLE IM TERAHERTZBEREICH**
COMMUNICATION ASSEMBLY FOR TRANSMITTING DATA WITH A TERAHERTZ CARRIER WAVE
AGENCEMENT DE TRANSFERT DE DONNÉES AYANT UNE ONDE PORTEUSE DANS LA PLAGE TÉRAHERTZ

(30) Priorität: 25.11.2013 DE 102013112993
(43) Veröffentlichungstag der Anmeldung: 27.05.2015
(73) Patentinhaber: Deutsche Telekom AG, 53113 Bonn (DE)
(72) Erfinder: Braun, Ralf-Peter, 12305 Berlin (DE); Schneider, Thomas, 14552 Michendorf (DE); Preußler, Stefan, 01612 Nünchritz (DE); Grigat, Michael, 64372 Ober-Ramstadt (DE)
(74) Vertreter: Braun-Dullaeus Pannen Patent- und Rechtsanwälte

(56) Entgegenhaltungen:
- WO-A2-2011/070448
- US-A1- 2011 142 082
- US-B1- 7 092 645

## Beschreibung

Die Erfindung betrifft eine Übertragungsanordnung zum Übertragen von Daten mit zumindest einer Trägerwelle im Terahertzbereich.

Insbesondere zur Überbrückung der letzten Meile in Zugangsnetzen, zur Anbindung von Funkmasten an das Backbone eines Netzbetreibers, zur Verbindung von Glasfaserstrecken in schwer zugänglichen Bereichen und zur Verbindung von Servern in einem Data Center erscheinen derzeit hochbitratige Funksysteme eine geeignete Lösung zu sein. Diese Systeme benötigen eine Sendeeinrichtung auf der einen und eine Empfangseinrichtung auf der anderen Seite und können damit auch in schwer zugänglichem Gelände oder bei fehlender Infrastruktur sehr einfach, schnell und kostengünstig aufgebaut werden. In Datenzentren können Funkverbindungen die Anzahl an nötigen Verbindungen zwischen den Servern drastisch herabsetzen und eine flexible Einbindung neuer Server sehr kosten- und zeiteffizient realisieren.

In kommerziellen DWDM(Dichte Wellenlängen-Multiplex)-Systemen mit Kanalbandbreiten von z.B. 50 GHz können derzeit 100 Gbit/s übertragen werden. Um derart hohe Datenraten drahtlos, bzw. ohne Wellenleiter zu übermitteln benötigt die Funkwelle eine hohe Trägerfrequenz im Millimeter- oder Submillimeter bzw. THz- Bereich. Die Erzeugung derart hoher Trägerfrequenzen mit sehr guter Qualität (geringe Linienbreite, geringes Phasenrauschen, Amplituden- und Frequenzstabil) am Sender bzw. auch am Empfänger zur Demodulation ist mit bestehenden Technologien unter realen Bedingungen sehr schwierig bis unmöglich. Das liegt zum einen daran, dass die Methoden zur Erzeugung derart hoher Frequenzen kompliziert sind, wobei es z.B. Halbleiterschaltkreise gibt, die Trägerfrequenzen bis in den THz Bereich erzeugen können. Zum anderen müssen die Umweltbedingungen insbesondere an der Sendeeinrichtung konstant gehalten werden, insbesondere die Temperatur, der Druck und die Luftfeuchte dürfen sich nur geringfügig ändern.

Es gibt bereits eine Vielzahl von Konzepten, die sich mit der Nutzung von Terahertzwellen zur drahtlosen Datenübertragung beschäftigen. Die noch nicht veröffentlichte europäische Patentanmeldung 13163794.4 der Anmelderin befasst sich mit einer Vorrichtung zur durchstimmbaren Erzeugung von Terahertzwellen. Die Vorrichtung umfasst mehrere Laser, wobei durch Überlagerung optischer Wellen zwei Frequenzen aus dem Frequenzkamm mittels stimulierter Brillouin-Streuung verstärkt werden. Nicht zu verstärkende Frequenzen des Frequenzkamms werden unterdrückt. Unter Laborbedingungen funktionieren die entsprechenden Vorrichtungen recht zuverlässig. Bei der Übertragung dieser Konzepte in die Praxis ergeben sich allerdings Schwierigkeiten, die noch gelöst werden müssen. So sind beispielsweise die Laser, die in o.a. Vorrichtung zum Einsatz kommen, sehr empfindlich hinsichtlich der Umgebungsbedingungen, insbesondere bezüglich der Temperatur, des Luftdrucks, der Luftfeuchtigkeit und Erschütterungen.

Die US 7,092,645B1 offenbart ein Breitbandkommunikationssystem, welches einen Fotomischer, einen Radiofrequenzmischer und eine Antenne verwendet. Der Fotomischer umfasst einen Hochgeschwindigkeitsfototransistor, der beleuchtet wird durch zwei Laserstrahlen. Die Laserquellen sind örtlich entfernt angeordnet von dem Radiofrequenzmischer und der Antenne.

Es ist daher Aufgabe der vorliegenden Erfindung, praxistaugliche Lösungen für die Umsetzungen der bekannten Konzepte zur Datenübertragung mit Trägerwellen im Terahertzbereich bereitzustellen.

Die der Erfindung zugrunde liegende Aufgabe wird gelöst durch eine Übertragungsanordnung nach Anspruch 1, bevorzugte Ausgestaltungen ergeben sich aus den Unteransprüchen.

Der Kern der Erfindung liegt insbesondere darin, die Lichtquelle zur Erzeugung der Lichtstrahlen, die wiederum für Differenzfrequenzmischung verwendet werden, und die Sendeeinrichtung, an der die Terahertzwellen abgestrahlt werden, örtlich zu trennen. Die Sendeeinrichtung umfasst insbesondere den Differenzfrequenzmischer und die Antenne zur Abstrahlung. So können der Aufstellort für die Lichtquelle und der Aufstellort für die Sendeeinrichtung auf die jeweiligen Anforderungen hin optimiert werden. Bei der Sendeeinrichtung kommt es nämlich bevorzugt darauf an, einen Ort zu finden, der eine möglichst gute Ausleuchtung des Empfangsgebietes bietet. Dies sind zumeist recht hoch gelegene Standorte, beispielsweise Bergspitzen oder hoch gelegene Stellen an einem Sendemast oder Funkturm. Umwelteinflüsse lassen sich dort kaum beeinflussen oder nur mit großem Aufwand neutralisieren. Daher soll aufgrund des erfindungsgemäßen Konzeptes die Lichtquelle an einem Ort positioniert werden, an dem die Umweltbedingungen ohne weiteres einstellbar sind bzw. weitgehend konstant gehalten werden können, beispielsweise in einem Datenzentrum des Netzbetreibers. Unter einem Datenzentrum werden auch Vermittlungsstellen (Central Office) des Netzbetreibers verstanden. Besonders vorteilhaft ist es, dass für die Übertragung der Lichtstrahlen ein bestehendes Glasfasernetz verwendet werden kann. Für den Aufbau eines Terahertz-Netzes reicht es dann beispielsweise aus, dass an vorhandenen Sendemasten lediglich eine terahertzfähige Sendeeinrichtung installiert wird, die über das vorhandene Glasfasernetz mit entsprechenden Lichtstrahlen "gefüttert" wird. An einem zentralen Ort, beispielsweise dem Datenzentrum des Netzbetreibers können dann ein oder mehrere Lichtquellen vorgesehen sein, die die erforderlichen Lichtstrahlen erzeugen.

Aufgrund dieses Verfahrens kann eine Vielzahl von drahtlosen Kanälen im Terahertzbereich mit sehr hoher Güte zur Verfügung gestellt werden. Die THz-Trägerfrequenzen werden insbesondere durch den optischen Überlagerungsempfang von jeweils zwei optischen Wellen am THz-Sendeort erzeugt, die fasergebunden von der Lichterzeugungseinrichtung aus angeliefert werden. Die Qualität der erzeugten THz Wellen am Sendeort ist dabei nicht von den Umweltbedingungen am Standort der Sendeeinrichtung, sondern alleine von der Qualität der optischen Wellen abhängig, die z.B. in dem Central Office erzeugt wurden, in dem gleichbleibende Umweltbedingungen einfach realisiert werden können. In der Lichterzeugungseinheit werden die optischen Träger z.B. mit Hilfe eines modengekoppelten Lasers erzeugt, um THz Signale mit bisher nicht erreichter Güte zu erzeugen. Damit ein derartiges System einfach und kostengünstig aufgebaut werden kann, werden die optischen Trägersignale zusammen mit den zu übertragenden Daten über die bereits vorhandene Glasfaserinfrastruktur übertragen. Am THz Sendeort ist weder eine elektrische Erzeugung der Trägerwellenlänge, noch eine Modulation nötig. Das in der Faser vorhandene Signal wird durch eine Photodiode oder ein anderes geeignetes Element aus dem optischen Bereich in den Millimeter- oder Submillimeterwellenbereich gewandelt und über eine Antenne abgestrahlt.

Als Lichtquelle kann eine Vorrichtung verwendet werden, wie sie in der nachveröffentlichten EP 2 793 328 A1 der Anmelderin (dort insbesondere mit Bezug auf Figur 1) beschrieben ist. Die Photodiode, die die Lichtstrahlen zur Zuführung an die Antenne in elektrische Signale umwandelt, ist nun entsprechend der hier vorliegenden Erfindung nicht im Bereich der Laser sondern entfernt im Bereich der Sendeeinrichtung angeordnet. Während der Laser im Datenzentrum angeordnet ist, ist die Photodiode "draußen im Feld" angeordnet. Dazwischen liegt die Glasfaserinfrastruktur oder ein sonstiges Fernübertragungssystem für optische Signale.

Der Vorteil dieser Übertragungsanordnung liegt nun insbesondere darin, dass der Erzeugungsort der erforderlichen Lichtquellen im Wesentlichen frei gewählt werden kann. So kann bei der Standortwahl weitgehend Rücksicht auf Umwelteinflüsse genommen werden. Die Sendeeinrichtung kann so beispielsweise auf einem Berggipfel installiert werden, um die umliegenden verwinkelten Täler möglichst gut mit Terahertzwellen "auszuleuchten". Solche Berggipfel eignen sich aber grundsätzlich schlecht als Standort für sehr komplexe und vor allem temperatursensitive Lichterzeugungseinrichtungen der genannten Art, die zudem auch wartungsintensiv sein können. Der erfindungsgemäße Vorschlag verlangt aber nunmehr lediglich, dass die recht unempfindlichen elektronischen Bauteile, wie Photodiode und Antenne, die über eine optische Datenleitung mit den Signalen versorgt werden, im Bereich der Antenne installiert werden. Denn ist das Licht in der Lichterzeugungseinrichtung unter definierten Umgebungsbedingungen erst einmal erzeugt, so sind die Umwelteinflüsse, die während des Transportweges auf die Lichtleitung einwirken, in der Regel zu vernachlässigen.

Unter einer Trägerwelle im Terahertzbereich wird insbesondere eine Trägerwelle von zumindest 0,1 THz, insbesondere zumindest 0,3 THz, insbesondere zumindest 1 THz, zumindest 2 THz, zumindest 3 THz, zumindest 10 THz oder zumindest 30 THz verstanden.

Der Abstand zwischen der Lichterzeugungseinrichtung bzw. den Lichtquellen und der Sendeeinrichtung beträgt insbesondere zumindest 100m, insbesondere zumindest 1km, zumindest 10km, zumindest 100km oder zumindest 1000km. Bei der möglichen Verwendung der Terahertzwellen zur Datenübertragung innerhalb eines Datenzentrums liegt der Abstand zwischen Lichtquelle und Sendeeinrichtung deutlich darunter und beträgt insbesondere maximal 10 m oder maximal 1 m.

Die Erfindung ermöglicht das Zusammenspiel von DWDM-Systemen insbesondere mit standardisierten optischen Kanal-Frequenzabständen entsprechend der ITU-T G.694.1 Recommendation für optische Transportnetze (OTN, ITU-T G.709) mit drahtlosen elektromagnetischen Milimeterwellen, sub-THz-Wellen und THz-Wellen für Verbindungsstrecken für Übertragungsdatenraten von größer als 1 Gbit/s, 10 Gbit/s, 40 Gbit/s, 100 Gbit/s oder 400 Gbit/s. Dabei ist die THz Verbindung insbesondere eine drahtlose Erweiterung des drahtgebundenen Netzes für hochbitratige Signale (extended Feeder).

Die Erzeugung der THz-Wellen erfolgt dabei durch die Überlagerung zweier optischer Signale (optischer Heterodyn-Empfang), deren Frequenzdifferenz der erzeugten THz-Welle entspricht. Die Güte der erzeugten THz-Welle ist allein durch die an der Sendeeinrichtung eingehenden optischen Wellen bestimmt, die in der Lichterzeugungseinrichtung (Central Office) unter definierten Umweltbedingungen erzeugt werden. Bei Verwendung insbesondere eines modengekoppelten Femtosekunden-Pulslasers mit korrelierten Trägern im Frequenzabstand der Puls-Repetitionsrate kann sich das Linienspektrum über mehr als 30 THz ausdehnen, so dass Träger mit höchsten Güten im Bereich von z.B. 100 MHz bis 30 THz erzeugt werden können. Dadurch können auch höherwertige Modulationsverfahren genutzt werden, z.B. n-QAM oder n-QPSK, um eine höhere Ausnutzung der Übertragungsbandbreite mit größeren spektralen Effizienten zu erreichen.

Das optische Langstreckenübertragungssystem, insbesondere DWDM-Transportnetz, mit den eingeführten optischen Übertragungstechnologien dient dabei zur Übertragung der optischen Träger, die die modulierte THz-Welle am Sende-Ort erzeugen und zur Gegenstation (Empfänger oder weitere Basisstation) abstrahlen. Dabei sind verschiedene Szenarien bevorzugt:
a) eine unidirektionale hochbitratige THz-Verbindung zwischen der Sendeeinrichtung und der Empfangseinrichtung, um hochbitratige (insbesondere > 10 Gbit/s) drahtlose Downloads zur Empfangseinrichtung durchzuführen. Die Empfangsstation ist dabei ein Endgerät.
b) eine unidirektionale hochbitratige THz-Verbindung zwischen der Sendeeineinrichtung und der Empfangseinrichtung, wobei ein Endgerät an der Empfangseinrichtung kabelgebunden angeschlossen ist.
c) eine bidirektionale hochbitratige THz Verbindung zwischen zwei THz-Sendeeinrichtungen innerhalb eines optischen Netzes, wobei die THz-Sendeeinrichtungen mit dem Signal eines gemeinsamen modengelockten Lasers synchronisiert sind. In einer solchen Variante sind die beiden Sendeeinrichtungen zugleich Empfangseinrichtungen für die jeweils andere Übertragungsrichtung. Die Erfindung verlangt also nicht, dass eine Empfangseinrichtung nur empfängt oder eine Sendeeinrichtung nur sendet.
d) eine bidirektionale Verbindung zwischen zwei THz-Sendeeinrichtungen, die jeweils mit ihren separaten modengelockten Lasern synchronisiert sind. Auch hier dienen die Sendeeinrichtungen jeweils auch als Empfangseinrichtung. Die Empfangseinrichtung, also die Sendeeinrichtung, die gerade empfängt, wird dann durch den modengelockten Laser auf der sendenden Seite der drahtlosen Übertragungsstrecke drahtlos synchronisiert.

Bevorzugt umfasst die Empfangseinrichtung ein Lokaloszillatorsignal, das mit der empfangenen modulierten Trägerwelle synchronisiert ist. Das Lokaloszillatorsignal wird insbesondere als unmodulierte Welle von der Sendeeinrichtung an die Empfangseinrichtung übertragen wird.

Zur Demodulation der drahtlos übermittelten Trägerwelle an der Empfangseinrichtung wird erfindungsgemäß zusätzlich die Trägerwelle in unmodulierter Form an der Empfangseinrichtung bereitgestellt. Die unmodulierte Trägerwelle ist dabei mit der modulierten Trägerwelle synchronisiert. Das bedeutet insbesondere, dass die unmodulierte Trägerwelle phasengleich mit der modulierten Trägerwelle an der Empfangseinrichtung ankommt. Dabei kann die unmodulierte Trägerwelle über einen separaten drahtlosen Kanal übertragen werden, insbesondere von derselben Sendeeinrichtung, die auch die modulierten THz Signale übersendet, insbesondere falls die Empfangseinrichtung ein einzelnes autarkes Element ist. Wenn der Empfänger aber ebenfalls einen Zugang zu einem optischen Netzwerk besitzt, wie z.B. bei der Verbindung von zwei Glasfaserstrecken, so kann das Trägersignal ebenfalls über Glasfasern zum Empfänger übertragen werden. In diesem Fall wird das gesamte Netzwerk über einen Frequenzkamm synchronisiert. Diese Art der Synchronisierung kann auch innerhalb eines Datencenters verwendet werden, ohne dass es zwischen den Lichtquellen und der Sendeeinrichtung einer optischen Langstreckenverbindung bedarf.

Die Erfindung wird anhand der Figuren nachfolgend näher erläutert. Hierin zeigt:
- Figur 1: den Aufbau einer ersten erfindungsgemäßen Übertragungsanordnung,
- Figur 2: die Sendeeinrichtung der Übertragungsanordnung nach Figur 1;
- Figur 3: beispielhaft mögliche Frequenzspektren in Zusammenspiel mit einem vorhandenen DWDM optischen Transportnetz
a) der modulierten und unmodulierten Lichtstrahlen für die Erzeugung der modulierten Trägerwelle,
b) zweier unmodulierter Lichtstrahlen für die Erzeugung der unmodulierten Trägerwelle,
c) die Frequenzspektren nach den Figuren 3a und 3b in einer gemeinsamen Darstellung;
- Figur 4: den Aufbau einer zweiten erfindungsgemäßen Übertragungsanordnung;
- Figur 5: den Aufbau einer dritten erfindungsgemäßen Übertragungsanordnung.

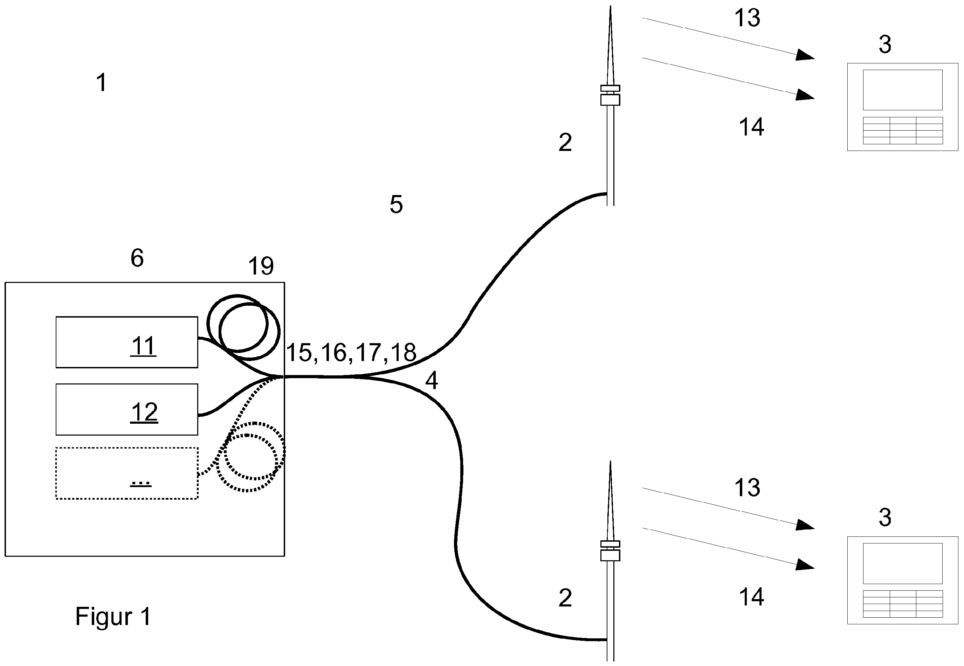

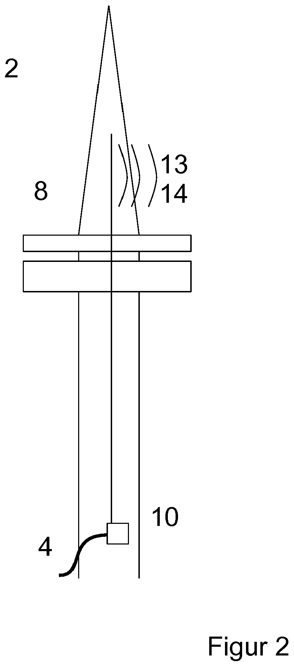

Die Figuren 1 und 2 werden im Folgenden gemeinsam beschrieben und zeigen den beispielhaften Aufbau einer erfindungsgemäßen Übertragungsanordnung 1. Diese umfasst zumindest eine Sendeeinrichtung 2, die Terahertzwellen 13, 14 in Richtung einer Empfangseinrichtung 3 aussendet. Als Empfangseinrichtung 3 kann ein Endgerät, beispielsweise ein Mobiltelephon, Laptop, Smartphone, Tablet-PC verstanden werden; die Empfangseinrichtung kann aber auch eine feststehende Einrichtung sein, die wiederum drahtgebunden mit einem Router verbunden ist, über den Endgeräte angeschlossen werden können. Eine Empfangseinrichtung muss insofern nicht das Endgerät selbst darstellen. Die Übertragungsanordnung kann auch mehrere Sendeeinrichtungen und mehrere Empfangseinrichtungen umfassen.

Die Sendeeinrichtung 2, in Einzelheit dargestellt in Figur 2, umfasst eine Antenne 8, die die Terahertzwellen 13, 14 aussendet. Die Antenne 8 ist mit einer Photodiode 10 verbunden. In die Photodiode 10 mündet eine optische Glasfaserleitung 4 eines optischen Langstreckenübertragungssystems 5. Durch Überlagerung von zwei Laserstrahlen 11, 12 werden dann die Terahertzwellen erzeugt. Die Anordnung aus Photodiode und Antenne kann auch in einem integrierten Schaltkreis realisiert sein; die Sendeeinrichtung selbst ist in den Figuren beispielhaft als Sendemast dargestellt.

Erzeugt werden die Laserstrahlen in einer entfernt angeordneten Lichterzeugungseinrichtung 6. Entfernt bedeutet in diesem Zusammenhang eine Entfernung von zumindest 100m insbesondere 1km oder zumindest 10km; es sind auch noch größere Entfernungen möglich. Hiermit soll zum Ausdruck kommen, dass das Absenden der Terahertzwellen und das Erzeugen der dazu notwendigen Laserstrahlen örtlich vollkommen voneinander entkoppelt wird. So ist es möglich, die Sendeeinrichtung an dem optimalen Sendestandort zu positionieren und die Lichtquellen 11, 12 an einem Ort zu positionieren, in dem die Umgebungsparameter der Lichtquelle möglichst gezielt eingestellt werden können und unabhängig von Umwelteinflüssen sind. Die von den Lichtquellen 11, 12, und gegebenenfalls von weiteren Lichtquellen erzeugten Lichtstrahlen können dann in ein gemeinsames Glasfaserkabel 4 eingespeist werden. Vor den Einspeisepunkt kann eine Kompensationsfaser 19 zwischengeschaltet werden, die Laufzeitdifferenzen aufgrund von Dispersionsunterschieden der unterschiedlichen Lichtwellenlängen beim Heterodyn-Empfang ausgleichen soll.

Es ist zu erkennen, dass von den Sendeeinrichtungen 2 jeweils zwei oder auch mehr Trägerwellen 13 oder 14 in Richtung der Empfangseinrichtung abgestrahlt werden. Eine der Trägerwellen ist eine modulierte Trägerwelle 13, auf die die zu übertragenden Daten aufmoduliert sind. Die andere Trägerwelle ist eine unmodulierte Trägerwelle 14, auf der keine Daten aufmoduliert sind. Die modulierte Trägerwelle 13 ist synchronisiert mit der unmodulierten Trägerwelle 14. Die unmodulierte Trägerwelle dient zur Demodulation der modulierten Trägerwelle. Aufgrund der sehr guten Synchronisation der modulierten Trägerwelle mit der unmodulierten Trägerwelle ergibt sich bei der weiteren Überlagerung der beiden Trägerwellen 13 und 14 an der Empfangseinrichtung 3 eine modulierte Zwischenfrequenz mit sehr guten Phasenrauscheigenschaften, die vergleichsweise einfach weiter im GHz Bereich verarbeitet werden kann. Je besser die Phasenrauscheigenschaften, d.h. die Qualität der Zwischenfrequenz ist, desto höher kann die spektrale Effizienz in Bit/s/Hz der übertragenen modulierten THz Welle sein. Insbesondere wird die hochbitratige Übertragung bei höheren Trägerfrequenzen einfacher, da der prozentuale Bereich der Übertragungsbandbreite zur Trägerfrequenz geringer wird, d.h. der Quotient aus Übertragungsbandbreite zu Trägerfrequenz beträgt bei einer spektralen Effizienz von 2 Bit/s/Hz (100 Gbit/s über 50 GHz Bandbreite im optischen DWDM System) gleich 0,5 bzw. 50% bei einer Trägerfrequenz von 100 GHz (50 GHz Übertragungsbandbreite zu 100 GHz Trägerfrequenz), so dass entsprechende Anpassungsschaltungen über einen relativ großen prozentualen Bereich von 50% der Trägerfrequenz durchgeführt werden müssen.

Im Gegensatz dazu ergibt sich bei einer Trägerfrequenz von 1 THz ein geringerer Quotient von 0,05 bzw. 5% (50 GHz Übertragungsbandbreite zu 1 THz Trägerfrequenz), so dass entsprechende Anpassungsschaltungen über einen prozentualen wesentlich geringeren Bereich von nur 5% durchgeführt werden müssen, so dass hier der technische Aufwand wesentlich geringer ist (Quotient entspricht dem Anpassungsbereich der Übertragungsbandbreite in Bezug auf die Trägerfrequenz, die für höhere Trägerfrequenzen als auch für höhere spektrale Effizienten geringer wird).

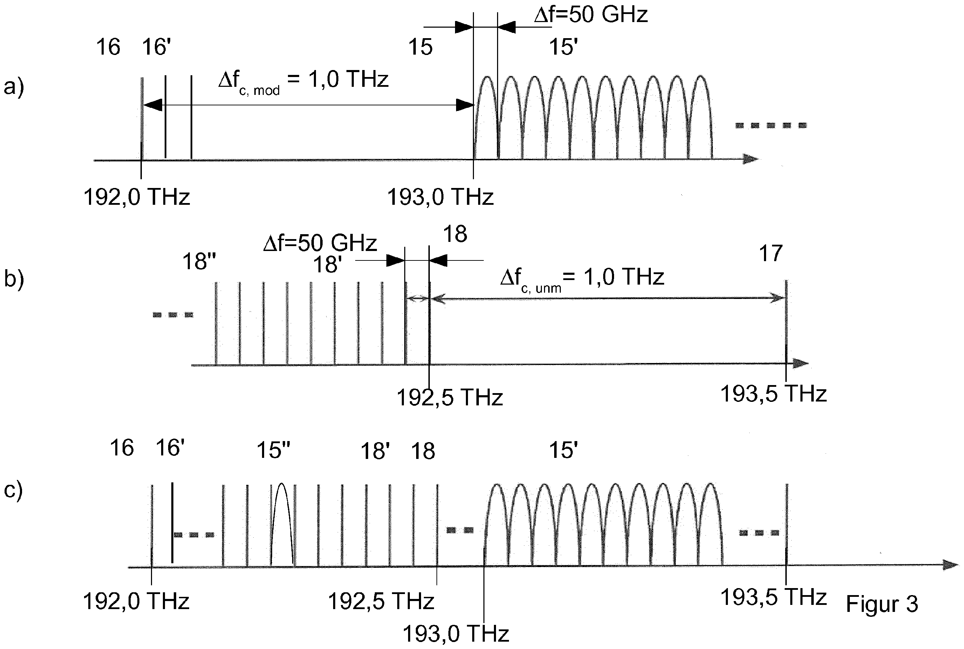

In Figur 3 werden beispielhafte Spektren der Lichtstrahlen gezeigt, die für die Differenzfrequenzmischung zur Erzeugung der Terahertzwellen verwendet werden. Die Bandbreite des Frequenzkamms hängt von der Pulsdauer des modengekoppelten Lasers ab und kann z.B. 30 THz betragen, so dass im Prinzip modulierte elektromagnetische Wellen mit bis zu 30 THz Trägerfrequenz erzeugt werden können. Wird z.B. das erweiterte C-Band mit dem Frequenzbereich von 96 x 50 GHz = 4,8 THz (ITU-T G.694.1; 193,1 THz - 197,9 THz) für die optische Erzeugung der THz Wellen zugrunde gelegt, dann können THz-Trägerwellen bis zu 4,8 THz erzeugt werden. Im C-Band können insbesondere die optischen Signale durch optische Verstärker (EDFA, Erbium doped fiber amplifier) sehr einfach verstärkt werden. Werden zusätzliche optische Bänder (z.B. das L-Band) mit einbezogen, können THz-Wellen auch mit höheren Frequenzen als 4,8 THz mit verfügbaren Technologien für optische Telekommunikationsnetze erzeugt werden.

Wenn eine bereits existierende oder neu mit existierenden Komponenten aufzubauende Infrastruktur benutzt werden soll, so ist die Bandbreite des optischen Systems durch die eingesetzten Fasernetzwerkkomponenten begrenzt. Sollte die optische Bandbreite des Puls-Lasers größer als die erforderliche Bandbreite für die THz Übertragung sein, lassen sich optische Filter zur Begrenzung der optischen Signale einsetzen. Sollte die optische Bandbreite des Puls-Lasers nicht ausreichen, so lassen sich weitere optische Komponenten zur Bandbreitenerweiterung des Linienspektrums verwenden.

Bei einem modengekoppelten Pulslaser (dies betrifft sowohl die modulierten als auch die unmodulierten Lichtstrahlen) hängt der Frequenzabstand zwischen den einzelnen Frequenzkomponenten im Kamm Δf von der Repetitionsrate im Laser, bzw. der Umlaufzeit der Pulse im Resonator ab und lässt sich einstellen und sehr genau stabilisieren. So lässt sich der Frequenzkamm entweder direkt in das Netzwerk einspeisen und der Frequenzabstand über die Repetitionsrate bestimmen, oder einzelne Frequenzkomponenten werden mit optischen Filtern herausgefiltert, der Kamm wird danach in das optische Netzwerk eingespeist. Heutige Femtosekunden pulsed Lasers besitzen eine Repetitionsrate von ca. 80 MHz, das ist für rein optische Filter zu gering. Deshalb müssen die gewählten Träger mit optischen SBS (stimulated Brillouin Scattering) schmalbandig herausgefiltert werden. Andere Komponenten der Laserstrahlen, insbesondere Frequenzkomponenten außerhalb des gewünschten Frequenzbandes, werden unterdrückt. Der Frequenzabstand wird dann durch das Kanalfilter des DWDM-Systems definiert. Dieser Frequenzabstand bestimmt den Abstand zwischen den einzelnen Millimeter- bzw. Submillimeterwellen-Kanälen, die über die Antenne abgestrahlt werden. Der nötige Abstand ist von der zu übertragenden Datenrate abhängig und lässt sich über anhand optischer Filter einstellen. Dabei ist eine schmalbandige Verstärkung mittels SBS nötig. Die herausgefilterten Komponenten werden dann in die DWDM Kanäle eingekoppelt und im Netz entsprechend zu einer oder mehreren Sendeeinrichtungen weitergeleitet. Insbesondere sind die DWDM-Kanäle durch das optische Transportnetz (OTN) bestimmt.

Die OTN bzw. DWDM-Kanäle enthalten entsprechende Lichtsignale für die Erzeugung der THz-Wellen. Wenn preiswerte Komponenten der optischen Nachrichtentechnik eingesetzt werden sollen, ist ein Frequenzabstand von Δf = 50 GHz (wie in Figur 3 beispielhaft gezeigt), oder Δf = 25 GHz besonders vorteilhaft, da dieser dem Frequenzabstand von DWDM-Kanälen im OTN (optical transport network, ITU-T G.709; DWDM Frequenzabstände, ITU-T G.694.1) entspricht. Jeder Kanal lässt sich dann mit DWDM-Filtern aus der Gesamtheit von Kanälen herausfiltern. Ist der Frequenzabstand zwischen den Moden im Kamm kleiner als die Bandbreite der zur Verfügung stehenden Filter, so lässt sich die in der vorgenannten Europäischen Patentanmeldung 13163794.4 beschriebene Methode zum Herausfiltern der Zinken nutzen.

Die Lichtquellen 11, 12 sind in den vorliegenden Figuren vereinfacht dargestellt. Die Lichtquellen 11, 12 umfassen einen bevorzugt eingesetzten modengekoppelten Femtosekundenlaser und nachgelagerte schmalbandige optische SBS Verstärker, welche Zinken aus dem Licht des modengekoppelten Femtosekundenlaser herausfiltern. Der erzeugte Frequenzabstand als auch die Phasenbeziehung zwischen den einzelnen Komponenten im Kamm ist sehr stabil. Durch eine Überlagerung zweier Frequenzkomponenten lassen sich Millimeter- und Submillimeterwellen mit sehr hoher Qualität erzeugen.

Figur 3a zeigt nun das Frequenzspektrum eines ersten modulierten optischen Laserstrahls 15, den optischen Träger der modulierten Daten, dessen Frequenz beispielhaft bei 193,0 THz liegt. Dieser Laserstrahl 15 wird von vom ersten Laser 11 erzeugt. Die zweite Lichtquelle 12 erzeugt einen zweiten Laserstrahl 16 mit einer Frequenz von 192,0 THz, der unmoduliert ist und als Referenzwelle für den ersten, modulierten Laserstrahl 15 dient. Durch Differenzfrequenzmischung an der Photodiode 10 wird nun eine modulierte Terahertzwelle 13 erzeugt, die über die Antenne 8 abgestrahlt wird, wobei die Antenne bevorzugt eine Si-Linse oder andere geeigneten Linsen zur Ausrichtung der Strahlung umfasst. Die modulierte Terahertzwelle 13 hat eine Frequenz von 1,0 THz, die sich aus der Differenz Δf_{c,mod} der Frequenzen der beiden Laserstrahlen 15, 16 ergibt. Soll nun die modulierte Terahertzwelle 13 in einer anderen Frequenz erzeugt werden, so kann dies z.B. durch Verändern der Frequenz oder Auswählen/Filtern eines anderen Teils des Frequenzkamms des modulierten Laserstrahls 15 erfolgen, insbesondere verschoben um ein Vielfaches von Δf = 50 GHz, wie beispielhaft gezeigt durch die Frequenzkämme 15' rechts von 193,0 THz.

Die Daten werden mit Hilfe optischer Modulatoren auf die ausgewählte Linie des Frequenzkamms oder die eingestellte Frequenz des ersten Laserstrahls 15 moduliert. Dazu wird z.B. einer der Zinken aus dem Kamm herausgefiltert. Ein optischer Modulator moduliert diese Welle und anschließend wird das modulierte Signal wieder mit anderen gewünschten schmalbandig verstärkten spektralen Komponenten des Kamms zusammengesetzt. Auf Grund der hohen Qualität der erzeugten Wellen eignen sich zur Modulation, sowohl die einfache Intensitäts-, Frequenz-, oder Phasenmodulationen als auch höherwertige Modulationsverfahren, entsprechend dem Stand der Technik, wobei dadurch insbesondere auch höhere spektrale Effizienten als z.B. 2 Bit/s/Hz eingesetzt werden können, z.B. auch 3, 4, 5, 6, 7, 8 Bit/s/Hz oder auch höher. Insbesondere erfolgt durch das optische Heterodyn-Verfahren eine lineare Umsetzung von der optisch modulierten Welle in die optisch generierte Trägerwelle, wodurch aufwendige THz-Modulatoren entfallen können.

Die modulierte Trägerwelle 13 wird folglich durch eine Überlagerung des ersten modulierten Laserstrahls15 und dem einer zweiten unmodulierten Zinke des Kamms 16 erzeugt. Der Begriff Laserstahl ist dabei weit auszulegen und umfasst auch die Möglichkeit, dass diese Laserstrahlen 15, 16 zwei aus einem einzigen Laserstrahl herausgefilterte Frequenzbereiche (-zinken, -kämme) sind, die am Ort der Sendereinrichtung oder im Bereich der Lichterzeugungseinrichtung durch Filter aus der Gesamtheit des Spektrums eines einzigen Laserstrahls herausgefiltert und auf die Photodiode oder einem anderen geeigneten Element überlagert werden. Die Differenzfrequenz Δf_{c,mod} zwischen diesen beiden Zinken bestimmt die Trägerfrequenz der modulierten Trägerwelle 13. Für Millimeterwellen liegt dieser Abstand zwischen 30 und 300 GHz, für Submillimeterwellen darüber. Günstigerweise sollte der Abstand so gewählt werden, dass die Trägerfrequenz der abgestrahlten Welle in eines der Fenster der THz-Übertragung fällt. Eine unmodulierte Zinke kann mit allen modulierten Zinken überlagert werden. Der Abstand der Millimeter- bzw. Submillimeterwellen beträgt dann Δfc + Δf. Dabei können mehrere solcher Kanäle von einer Antenne, oder von verschiedenen Antennen abgestrahlt werden. Alle Antennen sind an das Netzwerk angeschlossen und erhalten dasselbe, entsprechend aus dem DWDM System herausgefilterte Signal.

Wenn die Empfangseinrichtung 3 unabhängig ist, ist es schwierig bis unmöglich, innerhalb der Empfangseinrichtung 3 ein geeignetes Millimeter- bzw. Submillimeterwellensignal zur Demodulation der modulierten Trägerwelle 13 zu erzeugen. Die Empfangseinrichtung 3 kann wesentlich einfacher und preiswerter ausgebildet werden, wenn die unmodulierte Trägerwelle 13 gleichzeitig von der Sendeeinrichtung 2 mit übertragen wird, wie in Figur 1 gezeigt, wobei hier beide THz Wellen korreliert sind. Beide THz-Trägerwellen 13, 14 durchlaufen dieselbe drahtlose Übertragungsstrecke und werden daher gleichermaßen von der Umwelt beeinflusst. Die Übertragung der unmodulierten Trägerwelle 14 erfolgt bevorzugt auf einem separaten Kanal (bezogen auf den Kanal der ersten, modulierten Trägerwelle 13). Die verwendeten Frequenzbereiche für die Trägerwellen 13, 14 eignen sich auf Grund ihrer physikalischen Eigenschaften für eine gerichtete Übertragung. Daher lassen sich die beiden Trägerwellen 13, 14 bevorzugt auf separaten Kanälen mit je einer separaten Sendeantenne mit hoher Richtwirkung und schmaler Keule und einer separaten Empfangsantenne übertragen. Alternativ ist es auch möglich, dass die beiden Trägerwellen 13, 14 auch auf separaten Kanälen mit derselben Sendeantenne und derselben Empfangsantenne übertragen werden. In der Empfangseinrichtung müssen beide Kanäle z.B. nach einer Verstärkung einem Mischer zugeführt werden.

Figur 3b verdeutlicht analog zur Figur 3a, wie die unmodulierte Trägerwelle 14 aus zwei unmodulierten Laserstrahlen, dem dritten, unmodulierten Laserstrahl 17 und dem vierten, unmodulierten Laserstrahl 18 erzeugt werden. Entscheidend ist, dass die Differenzfrequenz aus diesen beiden Laserstrahlen identisch ist zu der Differenzfrequenz aus den ersten und zweiten Laserstrahlen nach Figur 3a, damit die entstehenden zweite THz-Trägerwelle 14 (unmoduliert) synchron zur ersten THZ-Trägerwelle 13 (moduliert) ist. Der gewünschte Frequenzkamm des vierten Laserstrahl kann analog nach den zu Figur 3a genannten Methoden aus den unterschiedlichen möglichen Werten 18, 18' ausgewählt oder erzeugt werden.

In Figur 3c sind die Frequenzkämme entsprechend der Figuren 3a und 3b gemeinsam in einem DWDM OTN System dargestellt. Dabei ist zu erkennen, dass Lichtstrahlen in unterschiedlichen Frequenzbereichen über eine gemeinsame optische Leitung übermittelt werden können. Da es nur auf identische Differenzen zwischen den jeweiligen Lichtstrahlen ankommt, die die modulierte bzw. unmodulierte Trägerwellen erzeugen, finden sich in einem DWDM-System eine Veilzahl von vier zueinander passenden Frequenzbereichen (Zinken, Kämme).

So können auch Frequenzbereiche in unmittelbarer Nähe der unmodulierten Lichtstrahlen 18 für die modulierten Lichtstrahlen verwendet, hier beispielhaft dargestellt durch einen modulierten Lichtstrahl 15" direkt zwischen zwei der unmodulierten Lichtstrahlen 18. Grundsätzlich ist hierzu anzumerken, dass die unmodulierten Lichtstrahlen 16, 17, 18 nur eine sehr geringe Bandbreite von wenigen GHz aufweisen, also ein "Breite" von z.B. 2 GHz. Daher sind diese als Linien 16, 17, 18 dargestellt. Die modulierten Lichtstrahlen 15 hingegen weisen eine größere Bandbreite auf, beispielsweise von 30 GHz, bei dem in Figur 3 angegeben Raster von 50 GHz. Es verbleiben dann strenggenommen zwischen dem Rand des Kamms 15 und dem unmodulierten Lichtstrahl ein nutzbarer Freiraum von ca. 9 GHz, auf je beiden Seiten.

In Figur 1 ist zwar nur der unidirektionale THz Downlink dargestellt, der in einem ersten Szenario direkt mit einem Endgerät verbunden ist. In einem zweiten Szenario ist der unidirektionale THz Downlink mit einer Basisstation verbunden, die dann ihrerseits kabelgebunden oder per drahtloser Kurzstreckenverbindung (z.B. WLAN, Bluetooth), oder auch per Mobilfunk oder auch per zellularem Mobilfunk mit dem Endgerät verbunden ist. In Anwendungsfällen, in denen die Datenrate im Downlink sehr viel größer als im Uplink ist, lässt sich der Uplink über ein anderes drahtloses System, insbesondere den zellularen Mobilfunk, oder über eine drahtgebundene aber nicht besonders hochbitratige Internetverbindung (hier kann bereits eine analoge Telefonverbindung, ISDN oder eine niedrig ratige DSL-Verbindung ausreichen) realisiert sein. Eine andere Möglichkeit besteht darin, das vom Sender mit übertragene unmodulierte Trägersignal zu modulieren und für den Uplink zu benutzen. Dabei kann auch ein dritter unmodulierter THz-Träger über den THz Downlink zusätzlich mit bereitgestellt werden, entsprechend den oben genannten Ausführungen der vorliegenden Erfindung.

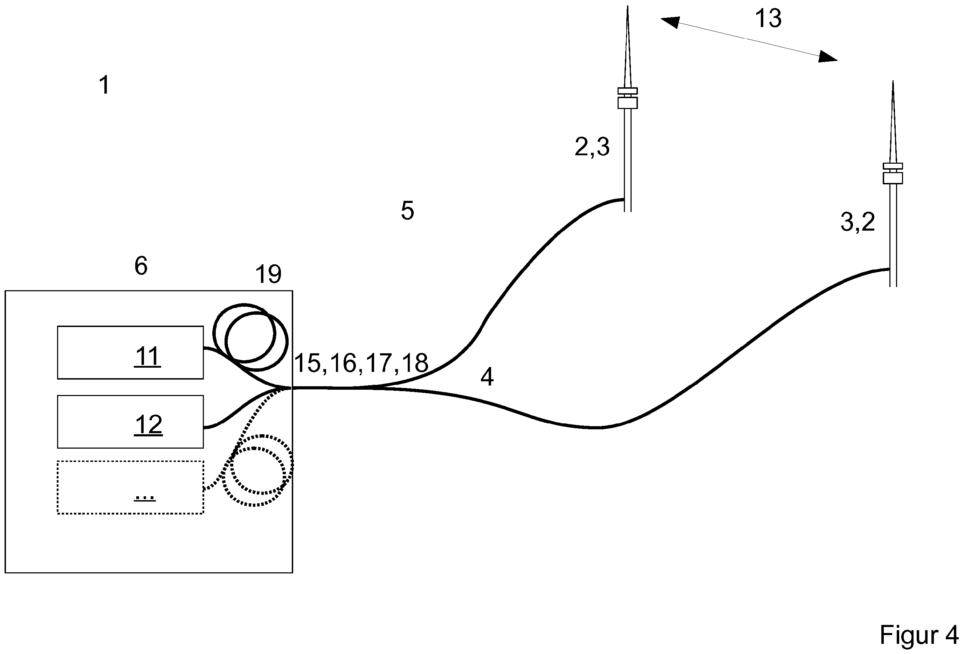

Ein weiterer möglicher Anwendungsfall ist das Übertragen von hochbitratigen Daten über eine bidirektionale drahtlose THz Verbindung zwischen zwei als Sendeeinrichtung dienenden Basisstationen 2, 3 in einem optischen Netzwerk, z.B. für den Aufbau einer schnellen Verbindung, falls Verbindungen unterbrochen wurden. Hier ist jede Basisstation sowohl Sendeeinrichtung 2 als auch Empfangseinrichtung 3. In diesem Fall muss die Trägerwelle 14 nicht mit übertragen werden. Wie Figur 4 zeigt, bekommen alle Netzwerke denselben Frequenzkamm über das optische Übertragungssystem 5, und sind somit aufeinander synchronisiert. Die unmodulierte Trägerwelle kann daher mit hoher Qualität in der Empfangseinrichtung 3 zur Demodulation wiederhergestellt werden. Generell können so einzelne Server in einem Datencenter genauso miteinander verbunden werden, wie in der Anordnung nach Figur 4 dargestellt. Der Frequenzkamm wird über die Glasfaserleitung an alle Server 2, 3 (das sind dann die Sende und Empfangsstationen) des Datacenters verteilt. Dazu eignet sich z.B. ein Stern-Netzwerk, oder eine Reihenschaltung zwischen den einzelnen Servern, so dass nur eine geringe Gesamtlänge der Glasfasern nötig ist. Die Verbindung jedes Servers des Centers mit jedem anderen Server wird dann über drahtlose THz-Signale, genau wie oben beschrieben, durchgeführt.

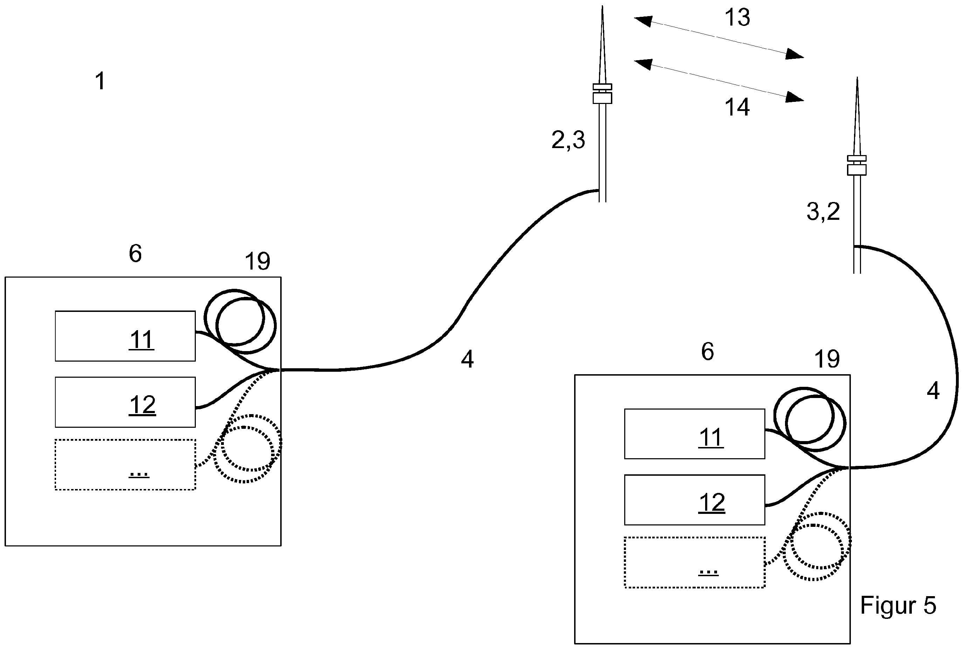

Ein weiterer Anwendungsfall umfasst eine bidirektionale hochbitratige drahtlose THz Übertragung zwischen zwei getrennten optischen Netzwerken, wie in Figur 5 dargestellt ist. Hier wird für jedes optische Netzwerk ein separater modengekoppelter Laser in einer separaten Lichterzeugungseinrichtung für die Erzeugung und den Empfang der THz Wellen bereitgestellt. Zur Demodulation wird dann für die jeweils empfangende Sendeeinrichtung, die dann die Empfangseinrichtung darstellt, auch die unmodulierte Trägerwelle 14 herangezogen, wie bezüglich Figur 1 bereits beschrieben.

### Bezugszeichenliste

- 1: Übertragungsanordnung
- 2: Sendeeinrichtung
- 3: Empfangseinrichtung
- 4: Glasfaserleitung
- 5: optisches Langstreckenübertragungssystem
- 6: Lichterzeugungseinrichtung
- 8: Antenne
- 10: Photodiode
- 11: erste Lichtquelle
- 12: zweite Lichtquelle
- 13: modulierte Trägerwelle
- 14: unmodulierte Trägerwelle
- 15: erster, modulierter Laserstrahl
- 16: zweiter, unmodulierter Laserstrahl als Referenzwelle für modulierten Laserstrahl
- 17: dritter, unmodulierter Laserstrahl
- 18: vierter, unmodulierter Laserstrahl als Referenzwelle für dritten, unmodulierten Laserstrahl
- 19: Kompensationsfaser

## Patentansprüche

1. Übertragungsanordnung (1) zum Übertragen von Daten mit zumindest einer Trägerwelle (13) im Terahertzbereich, umfassend
eine Sendeeinrichtung (2),
eine Empfangseinrichtung (3),
wobei die Sendeeinrichtung (2) und die Empfangseinrichtung (3) dafür eingerichtet sind, dass Daten mittels einer modulierten Trägerwelle (13) im Terahertzbereich von der Sendeeinrichtung (2) drahtlos auf die Empfangseinrichtung (3) übertragen werden,
wobei die Trägerwelle (13) unter Zuhilfenahme einer Differenzfrequenzmischung zweier optischer Lichtstrahlen (15, 16) an der Sendeeinrichtung (2) erzeugt wird, wobei die Lichtstrahlen (15, 16) von zumindest einer Lichtquelle (11,12), insbesondere von zwei Lichtquellen, generiert werden,
wobei zwischen der Lichtquelle bzw. den Lichtquellen (11, 12) und der Sendeeinrichtung (2) ein optisches Übertragungssystem (5) zur Übertragung der Lichtstrahlen (15, 16) vorhanden ist,
**dadurch gekennzeichnet**
**dass** zur Demodulation eine unmodulierte Trägerwelle (14) von der Sendeeinrichtung (2) auf die Empfangseinrichtung (3) übertragen wird, wobei die unmodulierte Trägerwelle (14) synchronisiert ist mit der modulierten Trägerwelle (13).

2. Übertragungsanordnung nach dem vorherigen Anspruch,
**dadurch gekennzeichnet,**
**dass** das optische Übertragungssystem (5) ein Langstreckenübertragungssystem ist und vorzugsweise durch ein DWDM-Transportnetz bereitgestellt wird.

3. Übertragungsanordnung nach einem der vorherigen Ansprüche,
**dadurch gekennzeichnet**
**dass** die Empfangseinrichtung (3) und die Sendeeinrichtung (2) gemeinsam zumindest mittelbar durch die selbe Lichtquelle (11, 12) miteinander synchronisiert sind.

4. Übertragungsanordnung nach einem der vorherigen Ansprüche,
**dadurch gekennzeichnet**
**dass** zur Demodulation die unmodulierte Trägerwelle (14) in Phase und Frequenz synchronisiert ist mit der modulierten Trägerwelle (13).

5. Übertragungsanordnung nach einem der vorherigen Ansprüche,
**dadurch gekennzeichnet**
**dass** die Empfangseinrichtung (3) und die Sendeinrichtung (2) ausschließlich über Lichtleitung (4) mit der selben Lichtquelle (11, 12) verbunden sind.

6. Übertragungsanordnung nach einem der vorherigen Ansprüche,
**dadurch gekennzeichnet,**
**dass** zumindest eine Sendeeinrichtung (2) zwei Antennen zur gleichzeitigen Übertragung einer modulierten Trägerwelle (13) und einer unmodulierten Trägerwelle (14) aufweist, und/oder
**dass** die zumindest eine Empfangseinrichtung (3) zwei Antennen zum gleichzeitigen Empfang einer modulierten Trägerwelle (13) und einer unmodulierten Trägerwelle (14) aufweist.

## Claims

1. Transmission assembly (1) for transmitting data with at least one carrier wave (13) in the terahertz range, comprising
a transmitting device (2),
a receiving device (3),
wherein the transmitting device (2) and the receiving device (3) are configured for transmitting data wirelessly from the transmitting device (2) to the receiving device (3) by means of a modulated carrier wave (13) in the terahertz range,
wherein the carrier wave (13) is generated at the transmitting device (2) with the aid of a difference frequency mixture of two optical light beams (15, 16), wherein the light beams (15, 16) are generated by at least one light source (11, 12), in particular by two light sources,
wherein between the light source or light sources (11, 12) and the transmitting device (2) an optical transmission system (5) for transmitting the light beams (15, 16) is present,
**characterized in that**
to provide demodulation, an unmodulated carrier wave (14) is transmitted from the transmitting device (2) to the receiving device (3), wherein the unmodulated carrier wave (14) is synchronized with the modulated carrier wave (13).

2. Transmission assembly according to the preceding claim, **characterized in that** the optical transmission system (5) is a long-range transmission system and preferably provided by a DWDM transport network.

3. Transmission assembly according to any one of the preceding claims, **characterized in that** the receiving device (3) and the transmitting device (2) are jointly at least indirectly synchronized with each other by the same light source (11, 12).

4. Transmission assembly according to any one of the preceding claims, **characterized in that** to provide the demodulation the unmodulated carrier wave (14) is synchronized in phase and frequency with the modulated carrier wave (13).

5. Transmission assembly according to any one of the preceding claims, **characterized in that** the receiving device (3) and the transmitting device (2) are connected to the same light source (11, 12) exclusively via optical fibre (4).

6. Transmission assembly according to any one of the preceding claims, **characterized in that** at least one transmitting device (2) has two antennas for the simultaneous transmission of a modulated carrier wave (13) and an unmodulated carrier wave (14), and/or
that the at least one receiving device (3) has two antennas for the simultaneous reception of a modulated carrier wave (13) and an unmodulated carrier wave (14) .

## Revendications

1. Système de transmission (1) pour la transmission de données avec au moins une onde porteuse (13) dans la plage térahetz, comprenant
un dispositif d'émission (2),
un dispositif de réception (3),
le dispositif d'émission (2) et le dispositif de réception (3) étant agencés pour que des données soient transmises sans fil du dispositif d'émission (2) au dispositif de réception (3) au moyen d'une onde porteuse (13) modulée dans une plage térahertz,
l'onde porteuse (13) étant générée sur le dispositif d'émission (2) en faisant appel à un mélange de fréquences différentielles de deux rayons lumineux optiques (15, 16),
les rayons lumineux (15, 16) étant générés par au moins une source de lumière (11, 12), notamment par deux sources de lumière,
un système de transmission optique (5) pour la transmission des rayons lumineux (15, 16) existant entre la source de lumière ou les sources de lumière (11, 12) et le dispositif d'émission (2),
**caractérisé en ce qu'**
une onde porteuse (14) non modulée est transmise pour démodulation du dispositif d'émission (2) au dispositif de réception (3), l'onde porteuse (14) non modulée étant synchronisée avec l'onde porteuse (13) modulée.

2. Système de transmission selon la revendication précédente, **caractérisé en ce que** le système de transmission optique (5) est un système de transmission à longue distance et est de préférence fourni par un réseau de transport DWDM.

3. Système de transmission selon l'une quelconque des revendications précédentes, **caractérisé en ce que** le dispositif de réception (3) et le dispositif d'émission (2) sont synchronisés en commun l'un avec l'autre au moins indirectement par la même source de lumière (11, 12).

4. Système de transmission selon l'une quelconque des revendications précédentes, **caractérisé en ce que** l'onde porteuse (14) non modulée est synchronisée en phase et fréquence avec l'onde porteuse (13) modulée.

5. Système de transmission selon l'une quelconque des revendications précédentes, **caractérisé en ce que** le dispositif de réception (3) et le dispositif d'émission (2) sont reliés exclusivement par le biais d'un conducteur de lumière (4) à la même source de lumière (11, 12).

6. Système de transmission selon l'une quelconque des revendications précédentes, **caractérisé en ce qu'**au moins un dispositif d'émission (2) comporte deux antennes pour la transmission simultanée d'une onde porteuse (13) modulée et d'une onde porteuse (14) non modulée, et/ou
**en ce qu'**au moins un dispositif de réception (3) comporte deux antennes pour la réception simultanée d'une onde porteuse (13) modulée et d'une onde porteuse (14) non modulée.
